# DEMANDE DE BREVET EUROPEEN

(11) **EP 2 317 245 A1**
(43) Date de publication de la demande: **04.05.2011**
(21) Numéro de dépôt: 10177558.3
(22) Date de dépôt: 20.09.2010
(51) Int. Cl.: F24J 2/52, F24J 2/04

(54) **Assemblage d'un dispositif de garde-corps et d'un panneau solaire**

(30) Priorité: 27.10.2009 FR 0957527
(71) Demandeur: DANI ALU, 69280 Sainte Consorce (FR)
(72) Inventeur: Laffay, Serge, 69340, Francheville (FR); Duplat, Bruno, 69340, Francheville (FR); Blain, David, 69630, Chaponost (FR); Rulliere, Patrice, 42800, Saint Martin la Plaine (FR)
(74) Mandataire: Chevalier, Renaud Philippe

(57) **Abrégé**

L'invention porte sur un assemblage pour un ouvrage, notamment un ouvrage en hauteur, comprenant un dispositif de garde-corps (1) pourvu de montants (10) fixés sur ledit ouvrage, au moins un panneau solaire (2) et des moyens de fixation (31, 32, 33, 34) dudit panneau solaire (2) sur lesdits montants (10), remarquable en ce que les moyens de fixation comportent des premiers moyens de réglage de la position du panneau solaire (2) relativement aux montants (10) selon une première direction (X), dite horizontale, sensiblement perpendiculaire aux montants et parallèle au panneau.

La présente invention trouve une application dans les domaines de la sécurisation des bâtiments et de la récupération d'énergie solaire.

## Description

La présente invention se rapporte à un assemblage pour un ouvrage, notamment un ouvrage en hauteur, comprenant un dispositif de garde-corps pourvu de montants fixés sur l'ouvrage et un panneau solaire fixé sur les montants du dispositif de garde-corps.

De façon connue, les dispositifs de garde-corps peuvent servir de support de panneau solaire; de tels dispositifs de garde-corps étant employés dans le domaine du bâtiment pour former des barrières assurant la sécurisation des personnes situées sur des ouvrages en hauteur, du type terrasse ou toiture par exemple, offrant ainsi une exposition privilégiée pour des panneaux solaires.

Un dispositif de garde-corps s'étend ainsi le long des bordures de terrasse ou de toiture, et comprend une succession de montants fixés sur l'ouvrage, au moyen notamment de sabots de garde-corps vissés dans ledit ouvrage. De tels dispositifs de garde-corps peuvent être fixés, notamment par vissage, sur des acrotères ou des murets formant le prolongement du mur de façade au-dessus du plan d'une toiture en terrasse, ou sur la dalle de l'ouvrage, à savoir la dalle formant la terrasse ou toiture, ou sur le mur de façade. Les montants peuvent également être fixés sur l'ouvrage au moyen de contrepoids rapportés sur des embases respectives des montants.

Il est également d'usage de prévoir entre les montants une ou plusieurs lisses de sécurité, comme par exemple une lisse haute rapportée au niveau des extrémités supérieures libres respectives des montants et formant une main courante et éventuellement une ou plusieurs lisses basses ou intermédiaires disposées sous la lisse haute de sorte à former des barreaux horizontaux.

Les ouvrages en hauteur sont généralement considérés comme des zones d'accueil privilégiées pour des panneaux solaires, notamment de type photovoltaïque, dédiés à la récupération d'énergie solaire. Ces panneaux solaires sont souvent disposés directement sur la terrasse ou toiture, de façon inclinée, et occupent ainsi un large espace et sont susceptibles de gêner la circulation sur l'ouvrage, notamment pour des ouvriers en charge de l'entretien. Dans le cas de bâtiments existants, il est parfois problématique voire impossible d'intégrer de tels panneaux sur la dalle de l'ouvrage.

Il est connu de la demande de brevet FR 2 367 257, de prévoir un assemblage comprenant un panneau solaire, du type à effet de serre, incliné et présentant un rebord inférieur en appui sur une dalle béton d'une terrasse au moyen d'un pied, et présentant un rebord supérieur fixé sur la main courante d'un garde-corps.

Il est également connu de la demande de brevet ES 1 067 742 U, de prévoir un assemblage dans lequel la fixation du panneau solaire est réalisée directement sur les montants au moyen de supports en «U» fixés à la fois sur le panneau et sur les montants.

L'un des inconvénients de ces assemblages connus de l'état de la technique est qu'ils n'offrent aucune adaptation du montage du panneau sur les montants en fonction des dimensions du panneau et de l'écartement réel des montants entre eux, en tenant compte des tolérances de pose.

En effet, il est d'usage que les montants soient écartés les uns des autres d'une distance préétablie selon la direction horizontale, en fonction notamment des normes de sécurité et des règles de construction intégrant les données relatives aux conditions de vent, à la hauteur de l'ouvrage, à l'orientation de l'ouvrage, etc. Cette problématique est spécifique des dispositifs de garde-corps qui, du fait de leur fonction de sécurisation, sont encadrés par de nombreuses normes qui établissent la configuration ou architecture des dispositifs de garde-corps.

Or, les dimensions des panneaux disponibles sur le marché sont très variables d'un fournisseur à l'autre, complexifiant ainsi la tâche pour les monteurs des panneaux solaires sur les montants du dispositif de garde-corps, en particulier lorsque l'on souhaite que les panneaux en question soient montés les uns à côté des autres de façon jointive.

La présente invention a notamment pour but de permettre un montage aisé et rapide des panneaux solaires sur des montants d'un dispositif de garde-corps, quelque-soit le nombre de montants et la variabilité de l'écartement entre les montants.

A cet effet, elle propose un assemblage pour un ouvrage, notamment un ouvrage en hauteur, comprenant un dispositif de garde-corps pourvu de montants fixés sur ledit ouvrage, au moins un panneau solaire et des moyens de fixation dudit panneau solaire sur lesdits montants du dispositif de garde-corps, remarquable en ce que les moyens de fixation comportent des premiers moyens de réglage de la position du panneau solaire relativement aux montants selon une première direction, dite horizontale, sensiblement perpendiculaire aux montants et parallèle au panneau.

De cette façon, il est possible de régler la position horizontale du panneau sur les montants du dispositif de garde-corps, et ainsi de rendre la position du panneau solaire indépendante de l'implantation des montants sur l'ouvrage (écartement, nombre, dimensions) définie par les normes spécifiques aux dispositifs de garde-corps. Autrement dit, ce réglage horizontal permet de désindexer le montage du panneau solaire vis-à-vis des montants, facilitant ainsi le montage du panneau solaire et le réglage de sa position pour monter plusieurs panneaux solaires les uns à côté des autres de manière ajustée ou jointive.

De façon préférentielle, les moyens de fixation comportent des deuxièmes moyens de réglage de la position du panneau solaire relativement aux montants selon une seconde direction, dite verticale, sensiblement parallèle aux montants et parallèle au panneau solaire.

Ainsi, ce second réglage vertical permet de régler la position verticale des panneaux, et donc de rattraper d'éventuels décalages verticaux entre les montants afin de conserver un alignement correct des panneaux solaires entre eux, quelque soit les imperfections initiales du dispositif de garde-corps accueillant les panneaux en question.

Dans une réalisation particulière, les moyens de fixation comportent :
- au moins une lisse de fixation s'étendant selon la première direction, avantageusement deux lisses de fixation respectivement haute et basse,
- des premiers organes de fixation de ladite lisse de fixation sur des montants du dispositif de garde-corps, et
- des seconds organes de fixation du panneau solaire sur la lisse de fixation, où les premiers moyens de réglage comportent des moyens de guidage des premiers organes de fixation et/ou des seconds organes de fixation sur la lisse de fixation selon la première direction.

En guidant horizontalement les premiers organes de fixation et/ou les seconds organes de fixation sur cette lisse de fixation, il est possible de régler la position horizontale du panneau solaire indépendamment de l'implantation des montants.

Cette lisse de fixation forme ainsi une lisse filante sur laquelle les premiers organes de fixation et/ou les seconds organes de fixation sont guidés en coulissement et réglables en position ; cette lisse de fixation se distinguant des lisses de sécurité usuellement prévues pour la sécurité des personnes et déjà mises en place sur les montants.

Avantageusement, les moyens de guidage des premiers organes de fixation et/ou des seconds organes de fixation sur la lisse de fixation sont indépendants les uns des autres, de manière à régler la position horizontale des premiers organes de fixation et/ou des seconds organes de fixation indépendamment les uns des autres, facilitant de ce fait le montage du panneau solaire.

Selon une caractéristique, les moyens de guidage comportent une rainure longitudinale ménagée dans la lisse de fixation et dans laquelle sont montés coulissant les premiers organes de fixation et/ou les seconds organes de fixation.

Selon une autre caractéristique, les premiers organes de fixation et/ou les seconds organes de fixation sont pourvus de moyens de serrage à l'intérieur de la rainure longitudinale.

Selon un mode de réalisation de l'invention, les moyens de serrage sont réalisés sous la forme d'un plat tournant mobile en rotation entre une première position dans laquelle ledit plat est apte à coulisser dans la rainure longitudinale et une seconde position dans laquelle ledit plat est bloqué à l'intérieur de la rainure longitudinale.

Selon une possibilité de l'invention, les deuxièmes moyens de réglage comportent les premiers organes de fixation montés coulissant sur les montants correspondants.

Selon une autre possibilité de l'invention, les moyens de serrage des premiers organes de fixation à l'intérieur de la rainure longitudinale forment également des moyens de serrage desdits premiers organes de fixation sur les montants correspondants.

De façon préférentielle, l'assemblage comprend en outre des troisièmes moyens de réglage de la position du panneau solaire relativement aux montants selon une troisième direction sensiblement perpendiculaire au panneau solaire et aux montants.

Ainsi, il est possible de régler l'éloignement du panneau solaire relativement aux montants, permettant ainsi de rattraper des imperfections dans la coplanarité des montants. En effet, les montants ne sont généralement pas tous coplanaires ou parallèles entre eux, certains montants étant plus ou moins décalés par rapport à la direction principale. Ces troisièmes moyens de réglage permettent de compenser ces décalages, cette compensation s'effectuant de préférence de façon indépendante pour chaque montant.

Selon une caractéristique, les troisièmes moyens de réglage comportent des cales de réglage intercalées entre le panneau solaire et la lisse de fixation.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue en perspective d'un assemblage conforme à l'invention ;
- la figure 2 est une vue détaillée de la zone II de la figure 1 montrant un premier organe de fixation en situation ;
- la figure 3 est une vue en perspective du premier organe de fixation visible sur la figure 2 ;
- les figures 4 et 5 sont des vues détaillées des zones IV et V respectives de la figure 1 montrant chacune un second organe de fixation en situation ; et
- la figure 6 est une vue en perspective du second organe de fixation visible sur la figure 4 ou sur la figure 5.

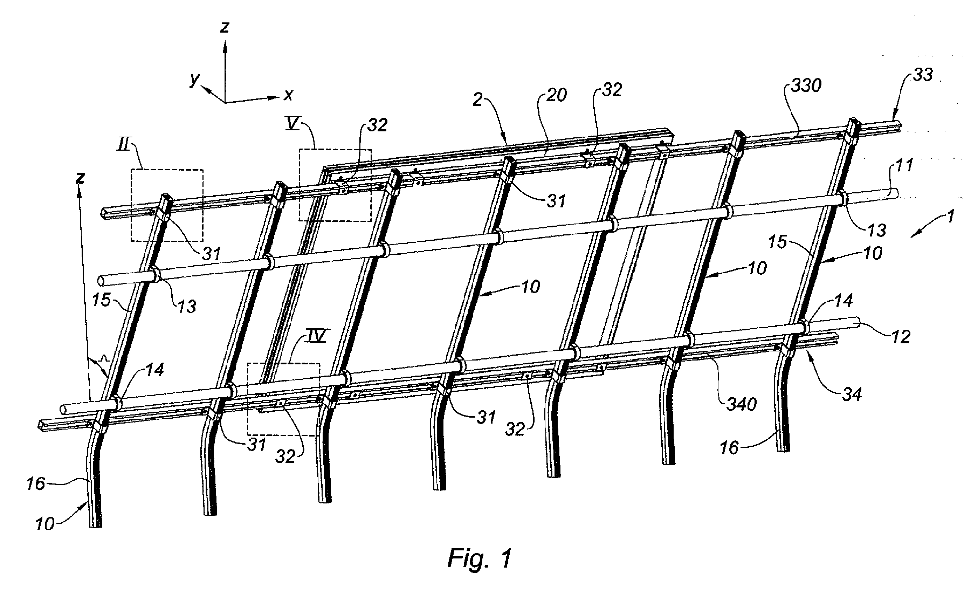

La description d'un assemblage selon l'invention est faite en référence aux figures 1 à 6, où ledit assemblage comprend :
- un dispositif de garde-corps 1 pour un ouvrage (non représenté) en hauteur du type terrasse ou toiture horizontale ;
- au moins un panneau solaire 2, notamment du type photovoltaïque ; et
- des moyens de fixation 31, 32, 33, 34 du panneau solaire 2 sur le dispositif de garde-corps 1.

Le dispositif de garde-corps 1 comprend une succession de montants 10 fixés sur l'ouvrage au moyen notamment d'un sabot de garde-corps (non visible). Les sabots de garde-corps sont par exemple fixés, notamment par vissage, sur un acrotère formant prolongement d'un mur de façade. Il est bien entendu que les sabots de garde-corps peuvent être fixés sur le mur de façade ou sur la face intérieure de l'acrotère ou sur une dalle horizontale de l'ouvrage.

Les montants 10 supportent, du côté intérieur au dispositif de garde-corps 1, des lisses de sécurité 11, 12 horizontales, du type barre tubulaire, au moyen de manchons de serrage 13, 14 respectifs ; lesdits lisses de sécurité 11, 12 s'étendant entre lesdits montants 10. Le dispositif de garde-corps 1 comporte par exemple une lisse de sécurité haute 11 formant main courante et une lisse de sécurité basse 12 disposée sous ladite lisse de sécurité haute 11.

Comme illustré en figure 1, les montants 10 sont coudés et présentent chacun :
- une partie supérieure 15 rectiligne et inclinée par rapport à la verticale Z selon un angle Ω compris entre environ 15° et 30° ; et
- une partie inférieure 16 rectiligne et verticale, c'est-à-dire perpendiculaire à la dalle horizontale de l'ouvrage, ladite partie inférieure 16 étant engagée dans le sabot de garde-corps correspondant.

Le panneau solaire 2, de forme générale parallélépipédique, comporte un cadre rectangulaire 20, notamment en acier, et présente :
- une face avant (non visible) exposée au soleil et pourvue notamment de cellules photovoltaïques pour convertir l'énergie solaire en électricité ; et
- une face arrière (visible sur la figure 1) fixée sur le dispositif de garde-corps 1.

Les moyens de fixation du panneau solaire 2 sur le dispositif de garde-corps 1 comportent :
- deux lisses de fixation 33, 34 s'étendant selon la direction horizontale X, respectivement une lisse de fixation haute 33 et une lisse de fixation basse 34 ;
- des premiers organes de fixation 31 des lisses de fixation 33, 34 sur des montants 10 du dispositif de garde-corps 1 ; et
- des seconds organes de fixation 32 du panneau solaire 2 sur les lisses de fixation 33, 34.

Les lisses de fixation 33, 34, disposées du côté extérieur au dispositif de garde-corps 1 opposé aux lisses de sécurité 11, 12, se présentent chacune sous la forme d'un profilé, réalisé notamment en aluminium, pourvu d'une rainure longitudinale 330, 340 dans laquelle sont montés coulissant et de façon réglable les premiers organes de fixation 31 et les seconds organes de fixation 32 correspondants.

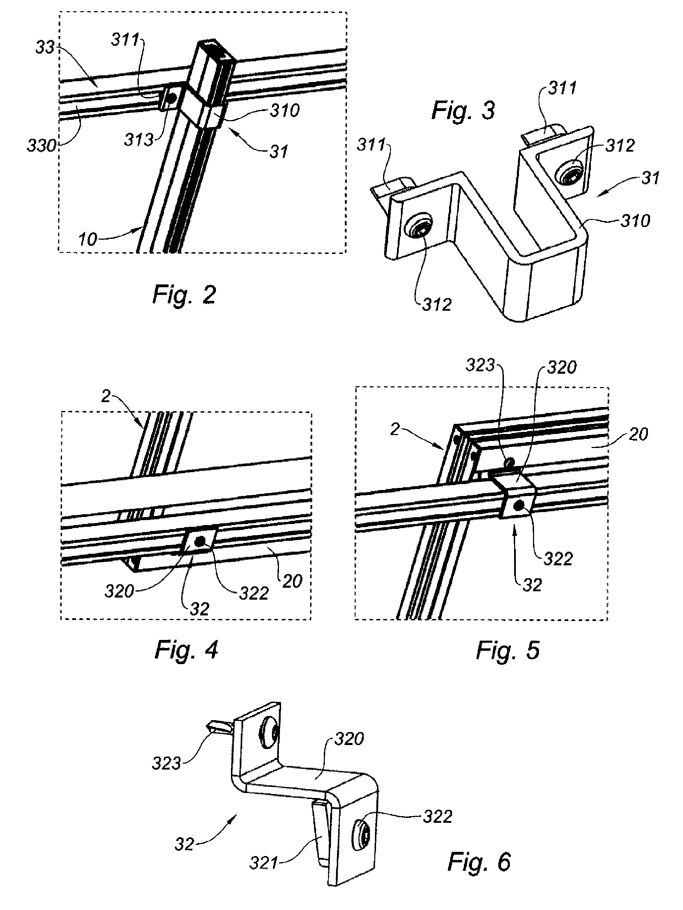

En référence aux figures 2 et 3, chaque premier organe de fixation 31 comporte :
- un étrier 310 en forme générale de « U » et de forme sensiblement complémentaire aux montants 10 pour enserrer le montant 10 correspondant ;
- deux plats tournants 311 disposés de par et d'autre de l'étrier 310 et conçus pour la fixation de l'étrier 310 dans la rainure longitudinale 330, 340 de la lisse de fixation 33, 34 correspondante ;
- deux vis 312 raccordées aux plats tournants 311 respectifs de manière à pouvoir tourner les plats tournants 311 au moyen d'un outil adéquat.

Chaque plat tournant 311 est mobile en rotation, par action sur la vis 312 correspondante, entre :
- une première position dans laquelle le plat tournant 311 est apte à coulisser dans la rainure longitudinale 330, 340 de la lisse de fixation 33, 34 correspondante, permettant ainsi de faire glisser l'étrier 310 le long de la lisse de fixation 33, 34 correspondante ; et
- une seconde position, après une rotation de 90° par rapport à la première position, dans laquelle le plat tournant 311 est bloqué à l'intérieur de la rainure longitudinale 330, 340 de la lisse de fixation 33, 34 correspondante, permettant ainsi de bloquer l'étrier 310 sur la lisse de fixation 33, 34 correspondante.

En référence aux figures 4 à 6, chaque second organe de fixation 32 comporte :
- une pièce de fixation 320 en forme générale de « Z » ;
- un plat tournant 321 disposé à une première extrémité de la pièce de fixation 320 et conçu pour la fixation de la pièce de fixation 320 dans la rainure longitudinale 330, 340 de la lisse de fixation 33, 34 correspondante ;
- une vis 322 raccordée au plat tournant 321 de manière à pouvoir tourner le plat tournant 311 au moyen d'un outil adéquat ;
- un élément de fixation 323 de la pièce de fixation 320 sur le panneau solaire 2, ledit élément de fixation 323 étant disposé à une seconde extrémité de la pièce de fixation 320 opposée au plat tournant 321 et étant par exemple réalisé sous la forme d'une vis auto-taraudeuse destinée au vissage sur le cadre 20 du panneau solaire 2.

Le plat tournant 321 est mobile en rotation, par action sur la vis 322 correspondante, entre :
- une première position dans laquelle le plat tournant 321 est apte à coulisser dans la rainure longitudinale 330, 340 de la lisse de fixation 33, 34 correspondante, permettant ainsi de faire glisser la pièce de fixation 320 le long de la lisse de fixation 33, 34 correspondante ; et
- une seconde position, après une rotation de 90° par rapport à la première position, dans laquelle le plat tournant 321 est bloqué à l'intérieur de la rainure longitudinale 330, 340 de la lisse de fixation 33, 34 correspondante, permettant ainsi de bloquer la pièce de fixation 320 sur la lisse de fixation 33, 34 correspondante.

Le réglage de la position horizontale du panneau solaire 2 se fait comme suit :
- positionnement des plats tournants 311 des premiers organes de fixation 31 dans la première position de manière à pouvoir faire coulisser les lisses de fixation dans la direction horizontale X relativement aux montants 10, et/ou positionnement des plats tournants 321 des seconds organes de fixation 32 dans la première position de manière pouvoir faire coulisser le panneau solaire 2 dans la direction horizontale X relativement aux lisses de fixation 330, 340 ; puis
- positionnement des plats tournants 311 des premiers organes de fixation 31 dans la seconde position de manière à pouvoir bloquer la position des lisses de fixation, et/ou positionnement des plats tournants 321 des seconds organes de fixation 32 dans la seconde position de manière pouvoir bloquer la position du panneau solaire 2.

Le réglage de la position verticale du panneau solaire 2 se fait comme suit :
- positionnement des plats tournants 311 des premiers organes de fixation 31 dans la première position de manière à pouvoir faire coulisser lesdits premiers organes de fixation 31 le long des montants 10, et donc à pouvoir faire coulisser le panneau solaire 2 le long des montants 10 ; puis
- positionnement des plats tournants 311 des premiers organes de fixation 31 dans la seconde position de manière à pouvoir bloquer la position des premiers organes de fixation 31, et donc du panneau solaire 2, sur les montants 10.

Ces réglages de la position horizontale et verticale du panneau solaire 2 sur les montants 10 du dispositif de garde-corps 1 permettent de contrôler la position du panneau solaire 2 indépendamment de l'implantation des montants 10 de garde-corps, autrement dit de désindexer le montage du panneau solaire 2 vis-à-vis des montants 10.

Bien entendu l'exemple de mise en oeuvre évoqué ci-dessus ne présente aucun caractère limitatif et d'autres améliorations et détails peuvent être apportés à l'assemblage selon l'invention, sans pour autant sortir du cadre de l'invention où d'autres formes de premiers organes de fixation et/ou de seconds organes de fixation peuvent être réalisées.

Il est par exemple envisageable de prévoir des moyens de réglage de la position du panneau solaire 2 relativement aux montants 10 selon une direction Y sensiblement perpendiculaire au panneau solaire 2 et aux montants 3, autrement dit des moyens de réglage de l'espacement entre le panneau solaire 2 et les montants 10.

Ces moyens de réglage peuvent comporter des cales de réglage intercalés entre le panneau solaire 2 et la lisse de fixation 33, 34 ; ces cales de réglage étant par exemple disposées sur les seconds organes de fixation 32.

Il est également envisageable d'étendre cet assemblage à d'autres types de dispositif de garde-corps. Par exemple, il est envisageable que le panneau solaire soit monté de façon réglable sur un dispositif de garde-corps du type barrière de sécurité de piscine.

## Revendications

1. Assemblage pour un ouvrage, notamment un ouvrage en hauteur, comprenant un dispositif de garde-corps (1) pourvu de montants (10) fixés sur ledit ouvrage, au moins un panneau solaire (2) et des moyens de fixation (31, 32, 33, 34) dudit panneau solaire (2) sur lesdits montants (10) du dispositif de garde-corps (1), **caractérisé en ce que** les moyens de fixation comportent des premiers moyens de réglage de la position du panneau solaire (2) relativement aux montants (10) selon une première direction (X), dite horizontale, sensiblement perpendiculaire aux montants et parallèle au panneau.

2. Assemblage selon la revendication 1, dans lequel les moyens de fixation comportent des deuxièmes moyens de réglage de la position du panneau solaire (2) relativement aux montants (10) selon une seconde direction (Z), dite verticale, sensiblement parallèle aux montants (10) et au panneau solaire (2).

3. Assemblage selon les revendications 1 ou 2, dans lequel les moyens de fixation comportent :
- au moins une lisse de fixation (33, 34) s'étendant selon la première direction (X),
- des premiers organes de fixation (31) de ladite lisse de fixation (33, 34) sur des montants (10) du dispositif de garde-corps (1), et
- des seconds organes de fixation (32) du panneau solaire (2) sur la lisse de fixation (33, 34),
où les premiers moyens de réglage comportent des moyens de guidage (330, 340 ; 311, 321) des premiers organes de fixation (31) et/ou des seconds organes de fixation (32) sur la lisse de fixation (33, 34) selon la première direction (X).

4. Assemblage selon la revendication 3, dans lequel les moyens de guidage comportent une rainure longitudinale (330, 340) ménagée dans la lisse de fixation (33, 34) et dans laquelle sont montés coulissant les premiers organes de fixation (31) et/ou les seconds organes de fixation (32).

5. Assemblage selon la revendication 4, dans lequel les premiers organes de fixation (31) et/ou les seconds organes de fixation (32) sont pourvus de moyens de serrage (311, 321) à l'intérieur de la rainure longitudinale (330, 340).

6. Assemblage selon la revendication 5, dans lequel les moyens de serrage sont réalisés sous la forme d'un plat tournant (311, 321) mobile en rotation entre une première position dans laquelle ledit plat tournant (311, 321) est apte à coulisser dans la rainure longitudinale (330, 340) et une seconde position dans laquelle ledit plat tournant (311, 321) est bloqué à l'intérieur de la rainure longitudinale (330, 340).

7. Assemblage selon les revendications 2 et 3, dans lequel les deuxièmes moyens de réglage comportent les premiers organes de fixation (31) montés coulissant sur les montants (10) correspondants.

8. Assemblage selon les revendications 5 et 7, dans lequel les moyens de serrage des premiers organes de fixation (31) à l'intérieur de la rainure longitudinale (330, 340) forment également des moyens de serrage desdits premiers organes de fixation (31) sur les montants (10) correspondants.

9. Assemblage selon l'une quelconque des revendications précédentes, comprenant en outre des troisièmes moyens de réglage de la position du panneau solaire (2) relativement aux montants (10) selon une troisième direction (Y) sensiblement perpendiculaire au panneau solaire (2) et aux montants (10).

10. Assemblage selon les revendications 3 et 9, dans lequel les troisièmes moyens de réglage comportent des cales de réglage intercalées entre le panneau solaire (2) et la lisse de fixation (33, 34).
